# EUROPÄISCHE PATENTSCHRIFT

(11) **EP 2 233 912 B1**
(45) Veröffentlichungstag und Bekanntmachung des Hinweises auf die Patenterteilung: **31.10.2018**
(21) Anmeldenummer: 09156366.8
(22) Anmeldetag: 26.03.2009
(51) Int. Cl.: G01N 19/02

(54) **Bodenelement-Prüfeinrichtung zum Prüfen eines Bodenelements insbesondere eines Kunstrasenbodenelements**
Floor element testing device for testing a floor element, in particular an artificial lawn base element
Dispositif de vérification d'un élément au sol destiné à vérifier un élément au sol, notamment d'un élément au sol de gazon artificiel

(43) Veröffentlichungstag der Anmeldung: 29.09.2010
(73) Patentinhaber: Polytex Sportbeläge Produktions-GmbH, 47929 Grefrath (DE)
(72) Erfinder: Schumann, Eckhard, 47929 Grefrath-Oedt (DE); Sick, Stephan, 41066, Mönchengladbach (DE); Driessen, Ralph, 47929, Grefrath (DE)
(74) Vertreter: Richardt Patentanwälte PartG mbB

(56) Entgegenhaltungen:
- WO-A-2005/024396
- US-A1- 2004 187 556
- ANONYMOUS: "FIFA quality concept; Handbook of test methods and requirements for Artificial Turf Football Surfaces" INTERNET CITATION, [Online] XP002369921 Gefunden im Internet: URL:http://www.fifa.com/documents/fifa/pub lication/FQC_HandBook_New.pdf> [gefunden am 2006-02-26]

## Beschreibung

Die Erfindung betrifft eine Bodenelement-Prüfeinrichtung zum Prüfen eines Bodenelements, insbesondere eines Kunstrasenbodenelements für ein Fußballfeld oder dergleichen.

Heutzutage wird neben echtem Naturrasen auch Kunststoffrasen verwendet, insbesondere auch im Sportbereich. Hierzu wird Kunststoffrasen u. a. auch als Fußballrasen in Fußballstadien eingesetzt. Ein solcher Kunststoffrasen muss jedoch zuvor geprüft werden, ob er für einen Einsatz als Fußballrasen geeignet ist.

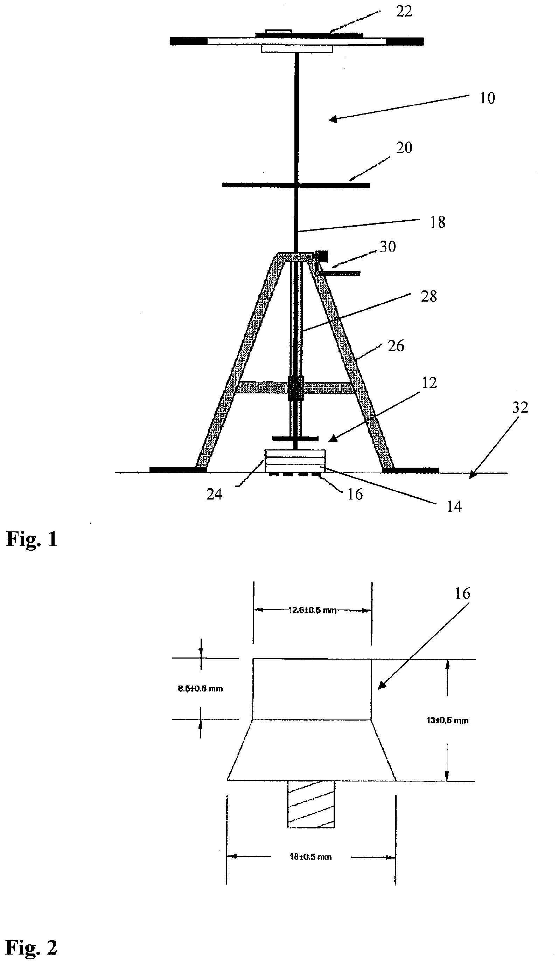

Bei der bisher von der FIFA verwendeten Bodenelement-Prüfeinrichtung zum Bestimmen der sog. Traktion, als Maß für die rotatorische Belastung der Fuß- und Kniegelenke, wird ein Drehwiderstand unter Verwendung eines Drehmomentschlüssels ermittelt. Dabei wird die Prüfeinrichtung von einem Benutzer auf dem Kunstrasen entsprechend gedreht und der dabei erzeugte Drehwiderstand von der Anzeige des Drehmomentschlüssels abgelesen. Die Bodenelement-Prüfeinrichtung hat hierbei den Nachteil, dass sie nur sehr ungenaue, starken messtechnischen Schwankungen und Einflüssen des Prüfers unterliegende, Messergebnisse liefert. Im Folgenden wird die Bodenelement-Prüfeinrichtung der FIFA noch näher mit Bezug auf nachfolgende Fig. 1 beschrieben.

Die US 2004 / 0 187 556 A1 offenbart ein Verfahren zum Messen eines Reibungskoeffizienten unter Verwendung einer Vorrichtung zum Messen eines Reibungskoeffizienten, wobei die Vorrichtung einen Messvorrichtungskörper aufweist, mit einem Sitz, der an einer Ecke einer Bodenfläche eines Grundrahmens vorgesehen ist, einem an dem Grundrahmen montierten Halter, ausgebildet zum Tragen eines Reibungsmessteils und eines Antriebsteils, einem an dem Grundrahmen montierten Aktuator, ausgebildet zum Auf- und Abbewegen des Reibungsmessteils und des Antriebsteils über den Halter, einer an einer Antriebswelle befestigten Antriebsscheibe, die sich von dem Antriebsteil erstreckt, einer Scheibe, die drehbar an der unteren Welle der Antriebsscheibe angebracht ist, wobei die Antriebsscheibe mit der Scheibe durch eine Ausgleichsfeder verbunden ist, einem auf einer Bodenfläche der Scheibe montierten Kontaktkörper, ausgebildet zum Messen eines Reibungskoeffizienten, und einer Verschiebungslehre zum Erfassen einer Verschiebung der Ausgleichsfeder; und wobei die Vorrichtung zusätzlich eine Steuerung aufweist, mit einer Tastatur zum Eingeben einer Messbedingung und einer Anzeige zum Anzeigen von Daten und einem Steuerteil; wobei das Verfahren vorsieht, dass der Messvorrichtungskörper in Kontakt mit der zu vermessenden Oberfläche gebracht wird, dass zuvor eine zu diesem Zeitpunkt durch den Kontaktkörper auf die zu messende Oberfläche ausgeübte Kraft bestimmt wird, dass die Antriebsscheibe gedreht wird, um die Ausgleichsfeder zu verschieben, dass die Steuerung einen Koeffizienten der statischen Reibung aus der Belastung des Kontaktkörpers sowie einer Verschiebung der Ausgleichsfeder zu dem Zeitpunkt berechnet, wenn die Scheibe beginnt sich zu drehen, und dass sie diesen auf dem Display anzeigt, um dadurch einen Haftreibungskoeffizienten zu messen.

Die WO 2005 / 024 396 A1 offenbart ein Verfahren und eine Vorrichtung zum Messen der Oberflächeneigenschaften einer Oberfläche sind offenbart. Die Vorrichtung umfasst eine drehbare Welle und einen am Boden angreifenden Fuß, der an einem unteren Ende der drehbaren Welle zur Drehung mit der drehbaren Welle angebracht ist, eine Antriebsvorrichtung zum Drehen der drehbaren Welle, eine Messvorrichtung zum Messen des Drehmoments, das von der drehbaren Welle erfahren wird, während sich die Welle dreht und der Bodeneingriffsfuß in Kontakt mit der Oberfläche steht, und eine Steuervorrichtung, die in der Lage ist, die vom Messgerät gemessenen Drehmomentwerte zu empfangen. Die Vorrichtung kann ein Drehmomentprofil bezüglich der Winkelverschiebung der drehbaren Welle erzeugen, um die Eigenschaften der zu prüfenden Oberfläche genau zu definieren.

Die WO 2002 / 063 279 A1 offenbart eine Vorrichtung zum Messen des statischen und / oder dynamischen Reibungskoeffizienten einer Oberfläche, insbesondere einer Natur- oder Kunstrasenfläche, wobei die Vorrichtung einen Rahmen aufweist, an den ein erster Arm mit einer Seite schwenkbar verbunden ist, der an seiner anderen Seite schwenkbar mit einer Stange verbunden ist, die mit einem Körper ausgestattet ist, der eine Oberfläche hat, die in Kontakt mit der zu messenden Oberfläche gebracht werden kann, wobei die Stange außerdem mit einer Einrichtung verbunden ist, um darauf ein über den Schwenkpunkt wirkendes Drehmoment auszuüben, und wobei ferner eine Belastungseinrichtung vorhanden ist, um eine Kraft auf die Stange in Richtung der zu messenden Oberfläche auszuüben, wobei die Stange ferner mit Mitteln zum Messen von Kräften versehen ist, die in der Stange auftreten, wobei die Mittel an einem Punkt zwischen dem Schwenkpunkt mit dem ersten Arm und der zum Tragen des Körpers ausgebildeten Seite angeordnet sind.

Die US 2006 / 0 130 556 A1 offenbart eine Vorrichtung zum Messen des statischen und / oder dynamischen Reibungskoeffizienten einer Oberfläche, insbesondere einer Natur- oder Kunstrasenfläche, wobei die Vorrichtung Folgendes aufweist: Ein auf Trägern angeordnetes Gehäuse, das auf der zu untersuchenden Oberfläche positioniert werden soll; eine drehbare Welle, die vertikal in dem Gehäuse angeordnet ist; einen Körper, der mit dem Ende der Welle verbunden ist, das der Oberfläche zugewandt ist, wobei der Körper eine Kontaktfläche aufweist, die in Kontakt mit der zu untersuchenden Oberfläche gebracht werden kann; sowie Messmittel zum Messen des durch die Reibung zwischen der zu untersuchenden Oberfläche und der Kontaktfläche des rotierenden Körpers verursachten Drehmoments während des Betriebs. Dabei liegt die Kontaktfläche des Körpers in einer Linie mit der Rotationsachse der drehbaren Welle.

Demnach ist es die Aufgabe der vorliegenden Erfindung, eine verbesserte Bodenelement-Prüfeinrichtung für ein Bodenelement, insbesondere ein Kunststoffrasenbodenelement, bereitzustellen.

Diese Aufgabe wird durch eine Prüfeinrichtung mit den Merkmalen des Patentanspruchs 1 gelöst.

Demgemäß wird erfindungsgemäß eine Bodenelement-Prüfeinrichtung zum Prüfen eines Bodenelements, insbesondere eines Kunstrasenbodenelements, bereitgestellt, wobei die Bodenelement-Prüfeinrichtung aufweist:
eine Prüfvorrichtung mit wenigstens einem oder mehreren Prüfelementen,
eine Fixierungsvorrichtung zum Fixieren der Bodenelement-Prüfeinrichtung in einer vorbestimmten Position auf dem Bodenelement, wobei die Fixierungsvorrichtung ein Grundplattenelementaufweist, an dessen Unterseite mehrere Fixierungselemente angeordnet sind, und wobei die Prüfvorrichtung gegenüber dem Grundplattenelement bündig oder erhöht angeordnet ist,
eine Antriebsmotoreinrichtung zum Bewegender Prüfvorrichtung mit einer vorbestimmten Geschwindigkeit oder einem vorbestimmten Geschwindigkeitsverlauf, und
eine elektronische Messeinrichtung zum Bestimmen wenigstens einer oder mehrerer Prüfgrößen.

Die Bodenelement-Prüfeinrichtung hat den Vorteil, dass die Prüfvorrichtung durch die Antriebseinrichtung mit einer vorbestimmten Geschwindigkeit oder einem vorbestimmten Geschwindigkeitsverlauf bewegt werden kann im Gegensatz zum Stand der Technik, wo die Bodenelement-Prüfeinrichtung bzw. deren Prüfvorrichtung statt über eine Antriebseinrichtung durch einen Benutzer von Hand gedreht werden muss. Dies hat den Vorteil, dass die Bewegung der Prüfvorrichtung wesentlich exakter und dadurch die Messergebnisse wesentlich genauer sind als bei der händischen Handhabung im Stand der Technik. Des Weiteren hat die Messeinrichtung den Vorteil, dass sie die Prüfgröße automatisch bestimmt und damit nicht wie bisher die Messwerte der Prüfgröße von einem Benutzer anhand der Anzeige des Drehmomentschlüssels abgelesen werden müssen, was verhältnismäßig ungenau ist. Speziell wird keine Veränderung der Drehmomente, sondern nur das maximal erfasste Drehmoment aufgezeigt.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform ist die Messeinrichtung derart ausgebildet, dass sie als eine Prüfgröße einen Drehwiderstand, einen Drehwinkel, um welchen die Bodenelement-Prüfeinrichtung gedreht wird, eine Länge, um welche die Prüfeinrichtung in axialer Richtung bewegt wird und/oder eine Zeitspanne innerhalb welcher die Prüfeinrichtung bewegt wird, bestimmt. Dies hat den Vorteil, dass eine sehr genaue Prüfung eines Bodenelements möglich ist, da die Messwerte der Prüfgröße einfach und sehr genau durch die Messeinrichtung erfasst und später an einen Benutzer ausgegeben werden können.

In einer weiteren erfindungsgemäßen Ausführungsform ist das jeweilige Prüfelement ein Nadelelement oder ein Fußballstollenelement. Dies hat den Vorteil, dass verschiedene Prüfelemente eingesetzt werden, je nachdem was z.B. für ein Bodenelement geprüft und welche Prüfgröße oder Prüfgrößen ermittelt werden sollen. Dabei kann die Prüfvorrichtung bzw. das Prüfplattenelement auswechselbar oder fest installiert an der Bodenelement-Prüfeinrichtung vorgesehen werden. Alternativ oder zusätzlich können auch die jeweiligen Prüfelemente auf der Prüfvorrichtung fest installiert oder auswechselbar vorgesehen werden.

Die Bodenelement-Prüfeinrichtung weist eine Fixierungsvorrichtung auf, zum Fixieren der Bodenelement-Prüfeinrichtung in einer vorbestimmten Position auf dem Bodenelement. Die Fixierungsvorrichtung weist dabei mehrere Fixierungselemente auf, wobei ein jeweiliges Fixierungselement beispielsweise ein Nadelelement, ein Stiftelement oder ein Nagelelement sein kann. Dies hat den Vorteil, dass die Bodenelement-Prüfeinrichtung ohne großen Aufwand gegen ein ungewolltes verschieben zuverlässig gesichert werden kann, im Gegensatz zu einem Dreibein, wie es im Stand der Technik verwendet wird.

Gemäß einer anderen erfindungsgemäßen Ausführungsform ist die Prüfvorrichtung mittels der Antriebseinrichtung mit einer vorbestimmten Geschwindigkeit drehbar und/oder in axialer Richtung verschiebbar ausgebildet. Die Geschwindigkeit kann dabei konstant sein oder variiert werden, je nach Funktion und Einsatzzweck. Die Antriebseinrichtung hat den Vorteil gegen über der Handbetätigung des Drehmomentschlüssels des Standes der Technik, dass eine Geschwindigkeit exakt eingestellt und realisiert werden kann, was beim Stand der Technik nicht möglich ist. Dadurch können sehr viel genauere Messergebnisse erzielt werden.

In einer weiteren erfindungsgemäßen Ausführungsform weist die Bodenelement-Prüfeinrichtung eine Kopplungseinrichtung auf, mit der die Prüfvorrichtung mit der Messeinrichtung koppelbar ist. Wahlweise oder alternativ weist die Bodenelement-Prüfeinrichtung eine Kopplungseinrichtung auf, mit der die Antriebseinrichtung mit der Messeinrichtung über eine Kopplungseinrichtung koppelbar ist. Dies hat den Vorteil, dass die Messeinrichtung je nach Bedarf bzw. Einsatzweck mit der Prüfvorrichtung bzw. der Antriebseinrichtung gekoppelt werden kann.
Die Fixierungsvorrichtung weist ein Grundplattenelement auf, an dessen Unterseite mehrere Fixierungselemente angeordnet sind. Die Fixierungsvorrichtung hat den Vorteil, dass sie einfach und preiswert in der Herstellung ist im Gegensatz zu dem Dreibein des Standes der Technik. Außerdem bewirkt das jeweilige Fixierungselement eine zusätzliche Fixierung der Bodenelement-Prüfeinrichtung, so dass diese sich nicht ungewollt verschieben kann. Die Prüfvorrichtung ist hierbei gegenüber dem Grundplattenelement bündig angeordnet.

Gemäß einer weiteren erfindungsgemäßen Ausführungsform ist die Prüfvorrichtung in einem Lagegehäuse drehbar gelagert, wobei die Prüfvorrichtung ein Prüfplattenelement aufweist, an dessen Unterseite das jeweilige Prüfelement angeordnet ist. Das Prüfplattenelement kann dabei mit einer Messkopfeinrichtung verbunden werden, wobei die Messkopfeinrichtung mit der Messeinrichtung verbunden oder über die Kopplungseinrichtung mit der Messeinrichtung koppelbar ist. Die Prüfvorrichtung bzw. das Prüfplattenelement kann dabei vorzugsweise auswechselbar ausgebildet sein. Dies hat den Vorteil, dass es gegen andere Prüfplattenelemente für weitere Versuche leicht ausgetauscht werden kann.
In einer anderen erfindungsgemäßen Ausführungsform weist die Bodenelement-Prüfeinrichtung eine Halterungsvorrichtung auf zum zusätzlichen Halten und Führen der Bodenelement-Prüfeinrichtung. An der Halterungseinrichtung kann dabei z.B. die Antriebseinrichtung befestigt sein und/oder die Fixierungsvorrichtung. Des Weiteren kann die Halterungseinrichtung an ihrem unteren Ende eine Radeinrichtung aufweisen, zum Rollen der Bodenelement-Prüfeinrichtung. Dies hat den Vorteil, dass die Bodenelement-Prüfeinrichtung sehr leicht transportiert werden kann. Dabei kann zusätzlich eine Griffeinrichtung an der Bodenelement-Prüfeinrichtung, der Halterungseinrichtung oder der Radeinrichtung vorgesehen werden zum einfacheren Schieben bzw. Rollen der Bodenelement-Prüfeinrichtung.

In einer weiteren erfindungsgemäßen Ausführungsform ist die Prüfvorrichtung entlang der Halterungseinrichtung hin- und her beweglich vorgesehen. Dies hat den Vorteil, dass die Prüfvorrichtung z.B. aus einer vorbestimmten Höhe auf das Bodenelement abgesenkt werden kann. Dabei kann die Bodenelement-Prüfeinrichtung derart ausgebildet werden, so dass die Prüfvorrichtung von Hand oder mittels der Antriebseinrichtung entlang der Halterungseinrichtung hin- und her bewegt werden kann und beispielsweise in einer vorbestimmten Höhe fixiert werden kann.

In einer anderen erfindungsgemäßen Ausführungsform weist die Bodenelement-Prüfeinrichtung eine Auswerteeinrichtung zum Auswerten der Messergebnisse der Messeinrichtung auf oder ist mit einer solchen koppelbar. Die Auswerteeinrichtung ist dabei derart ausgebildet, dass sie die Messergebnisse der Messeinrichtung aufnimmt, abspeichert und auswertet. Dadurch können die Messergebnisse schneller, effizienter und genauer ausgewertet werden.

Gemäß einer weiteren erfindungsgemäßen Ausführungsform ist die Antriebseinrichtung beispielsweise eine Antriebsmotoreinrichtung, wobei die Antriebsmotoreinrichtung wenigstens einen Motor, z.B. einem Elektromotor, aufweist. Des Weiteren weist die Antriebseinrichtung ein Getriebe auf, zum Bewegen der Prüfvorrichtung. Die Prüfvorrichtung kann dabei gedreht bzw. rotiert werden und/oder in axialer Richtung hin- und her bewegt werden.

Die Erfindung wird nachfolgend anhand der in den schematischen Figuren der Zeichnungen angegebenen Ausführungsbeispiele näher erläutert. Es zeigen:
- Fig. 1: eine schematische Ansicht einer Bodenelement-Prüfeinrichtung gemäß dem Stand der Technik;
- Fig. 2: eine schematische Ansicht eines Fußballstollenelements, wie es bei einer Bodenelement-Prüfeinrichtung eingesetzt wird;
- Fig. 3: eine schematische Schnittansicht einer Bodenelement- Prüfeinrichtung gemäß der Erfindung;
- Fig.4: eine Perspektivische Ansicht einer weiteren Ausführungsform der Bodenelement-Prüfeinrichtung gemäß der Erfindung;
- Fig. 5: die Bodenelement-Prüfeinrichtung gemäß Fig. 4 mit angeschlossener Auswerteeinrichtung;
- Fig. 6: eine schematische Schnittansicht durch ein Kunstrasenbodenelement;
- Fig. 7: eine perspektivische Ansicht der Bodenelement-Prüfeinrichtung gemäß Fig. 4 von unten, wobei mehrere Fußballstollenelemente als Prüfelemente eingesetzt sind;
- Fig. 8: ein Diagramm einer Messung eines Bodenelementes vom Typ "Ligaturf Showroom" mittels der Bodenelement-Prüfeinrichtung gemäß Fig. 7 ;
- Fig. 9: eine Ansicht der Unterseite der Bodenelement-Prüfeinrichtung gemäß Fig. 4 , wobei als Prüfelemente Nadelelemente eingesetzt sind; und
- Fig. 10: ein Diagramm einer Messung eines Bodenelementes vom Typ "Elastikschicht Showroom" mittels der Bodenelement-Prüfeinrichtung gemäß Fig. 9.

In allen Figuren sind gleiche bzw. funktionsgleiche Elemente und Vorrichtungen bzw. Einrichtungen - sofern nichts anderes angegeben ist - mit denselben Bezugszeichen versehen worden.

In Fig. 1 ist zunächst eine Bodenelement-Prüfeinrichtung 10 gemäß dem Stand der Technik dargestellt. Eine solche Bodenelement-Prüfeinrichtung 10 ist in dem Handbuch für Testverfahren der FIFA für Fußballrasen " FIFA Quality Concept for Football Turf - Handbook of Test Methods, January 2008 Edition" auf den Seiten 25 bis 27 beschrieben. Die Bodenelement-Prüfeinrichtung 10 weist dabei eine Testfußvorrichtung als Prüfvorrichtung 12 auf, welche eine Metallscheibe 14 mit einem Durchmesser von 145mm ±10mm aufweist. Auf der Unterseite der Metallscheibe 14 sind sechs Fußballstollenelemente 16 gleichmäßig über den Umfang verteilt angeordnet. Die Fußballstollenelemente 16 sind dabei jeweils in einem Abstand von 46mm ±1mm von der Mitte der Scheibe 14 aus entfernt angeordnet und weisen jeweils den gleichen Abstand zueinander auf.

Die Testfußeinrichtung 12 ist des Weiteren mit einer Welle 18 verbunden. Die Welle 18 ist hierbei mit Hebegriffen 20 versehen, welche zentral zu der Mitte der Scheibe 14 mit den Fußballstollenelementen 16 angeordnet sind. Des Weiteren ist ein zweihändiger mechanischer Drehmomentschlüssel 22 an dem oberen Ende der Welle 18 angebracht. Der Drehmomentschlüssel 22 weist dabei eine Skala von 0Nm bis maximal 80Nm auf, mit einem Inkrement bzw. Steigerungsschritten von 2Nm.

Weiter ist ein Satz von ringförmigen Gewichten 24 vorgesehen, welcher zentral auf der Oberseite der Scheibe 14 mit den Fußballstollenelementen 16 angeordnet ist. Die ringförmigen Gewichte sind hierbei frei drehbar. Die Gesamtmasse der Scheibe 14 mit den Fußballstollenelementen 16, den Gewichten 24, der Welle 18 und dem Drehmomentschlüssel 22 soll 46kg ±2kg betragen.

Darüber hinaus sind ein Dreibein 26 und eine Führung 28 vorgesehen, um eine laterale bzw. seitliche Bewegung der Testfußvorrichtung 12 während eines Tests zu minimieren. Das Dreibein 26 soll dabei jedoch nicht die freie Beweglichkeit der Welle 18 beschränken. Des Weiteren weist die Führung 28 eine Halte- und Absenkeinrichtung 30 zum Halten und Absenken der mit Gewichten 24 versehenen Scheibe 14 mit den Fußballstollenelementen 16 auf. Die Scheibe 14 mit den Fußballstollenelementen 16 soll dabei auf ein Testmuster aus einer Höhe von 60mm ±5mm abgesenkt werden.

Bevor nun der Test mit einer Kunstrasenprobe bzw. einem Kunstrasenbodenelement 32 durchgeführt wird, muss zunächst sichergestellt werden, dass die Scheibe 14 und die darauf montierten Fußballstollenelemente 16 frei von Dreck bzw. Schutt und ungewollten Füllungen sind. Danach wird die Bodenelement-Prüfeinrichtung 10 zusammengebaut und dabei sichergestellt, dass die Testfußvorrichtung 12 frei beweglich ist. Dann wird der Drehmomentschlüssel 22 entfernt und die Testfußvorrichtung 12 aus einer Höhe von 60mm ±5mm auf die Oberfläche des Testmusters 32 abgesenkt. Anschließend wird der Drehmomentschlüssel 22 wieder an der Testfußvorrichtung 12 befestigt. Der Drehmomentschlüssel 22 zeigt dabei zu Beginn des Tests ein Drehmoment von 0Nm an. Ohne dass irgendein vertikaler Druck auf den Drehmomentschlüssel 22 und nur ein minimales Drehmoment auf den Drehmomentschlüssel 22 aufgebracht wird, wird der Drehmomentschlüssel 22 und die Testfußvorrichtung 12 gedreht. Die Drehung erfolgt dabei gemäß der FIFA nach Möglichkeit ohne ein Reißen bei einer nominalen Geschwindigkeit von 12 rev/min (12 Umdrehungen pro Minute) bis eine Bewegung der Scheibe 14 mit den Fußballstollenelementen 16 auftritt und eine Drehung des Drehmomentschlüssels 22 um mindestens 45° erfolgt ist. Der maximale Wert der auf dem Drehmomentschlüssel 22 am nächsten zu Nm angezeigt wird, wird aufgezeichnet.

In einem nächsten Schritt wird der Mittelwert des Drehwiderstands bestimmt. Das Durchschnittsergebnis das am nächsten an Nm ist, beispielsweise 40Nm wird berichtet. Die Messunsicherheit wird dabei mit ±2Nm vorgegeben.

Im Rahmen von Laborversuchen wird der Drehwiderstand weiter an fünf Positionen auf dem Testmuster 32 bestimmt. Dabei wird sichergestellt, dass die Testpositionen mindestens 100mm (Außenkante der Testfußvorrichtung zu Außenkante) voneinander entfernt sind und weiter jede der Testpositionen mindestens 100mm (Außenkante der Testfußvorrichtung 12) von der Seite bzw. dem Rand des Testmusters entfernt ist. Das Prüfen des Testmusters 32 mittels der Bodenelement-Prüfeinrichtung 10 im Rahmen von Labortestes wird bei trockenen und feuchten bzw. nassen Bedingungen durchgeführt.

Des Weiteren werden auch Feldversuche durchgeführt. Hierzu werden die Tests unter bestimmten Witterungsbedingungen durchgeführt, wie sie in dem zuvor zitierten FIFA Handbuch in Abschnitt 5.3 beschrieben werden. Die Witterungsbedingungen werden hierbei bei den durchgeführten Tests protokolliert bzw. festgehalten. Bei den Feldversuchen werden bei jedem Testort fünf einzelne Messungen durchgeführt, wobei jede Messung jeweils 100mm (Außenkante der Testfußvorrichtung 12 zu Außenkante der Testfußvorrichtung 12) von der anderen entfernt durchgeführt wird.

Die zuvor beschriebene Testfußvornchtung 12 hat jedoch den Nachteil, dass die Geschwindigkeit mit der diese gedreht wird sehr ungenau ist und außerdem von Person zu Person welche dreht schwankt. Dies resultiert wiederum in entsprechend ungenauen Messergebnissen. Weiter ist das Ablesen des Drehmomentschlüssels 22 ebenfalls verhältnismäßig ungenau. Des Weiteren ist der Zusammenbau der Bodenelement-Prüfeinrichtung 10 sehr umständlich. Außerdem muss die Bodenelement-Prüfeinrichtung 10 von einer Testposition zur nächsten geschleppt werden. Des Weiteren ist die Testfußvorrichtung 12 nur zur Messung des Drehwiderstands des Kunstrasenbodenelements 32 als Prüfgröße einsetzbar. Weitere Prüfgrößen können mit der Testfußvorrichtung 12 der FIFA nicht gemessen werden.

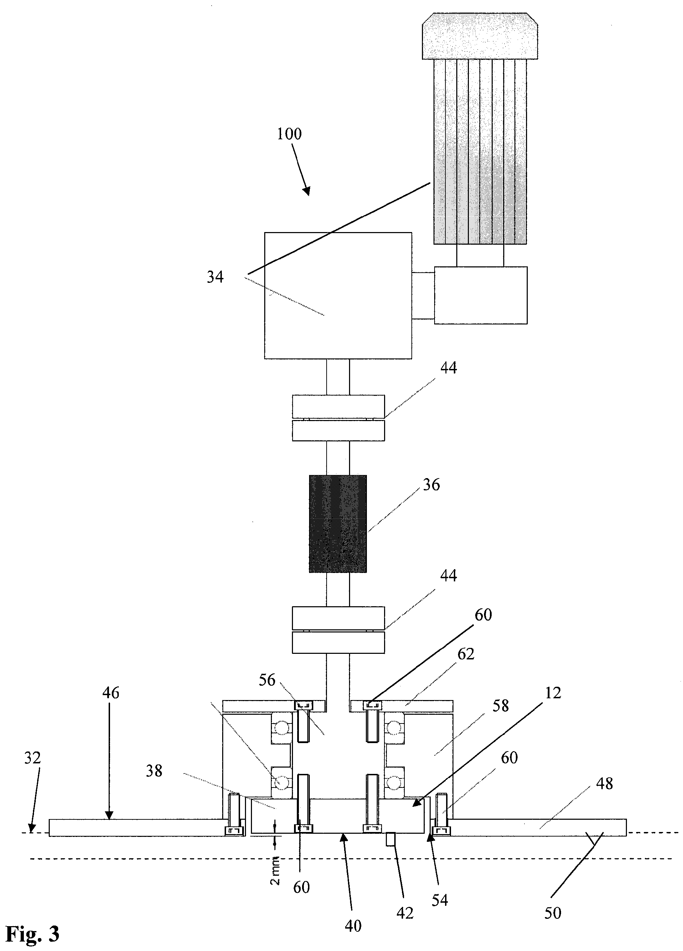

In Fig. 2 ist ein Beispiel eines Stollenelements 16 gezeigt, wie es bei der Bodenelement-Prüfeinrichtung 10 des Standes der Technik gemäß Fig. 1 und den nachfolgenden erfindungsgemäßen Bodenelement-Prüfeinrichtungen 100 gemäß den Fig. 3-5 und 7 eingesetzt werden kann. Das in Fig. 2 gezeigte Stollenelement 16 ist beispielsweise ein Fußballstollenelement 16, das u.a. für den Drehwiderstandstest verwendet wird. Das Stollenelement 16 ist dabei z.B. aus Kunststoff hergestellt und weist eine Shore-Härte von beispielsweise 96 ±2 auf. Nach einem Maximum von fünfzig Tests des Drehwiderstands, wird die Länge aller Stollenelemente 16 gemäß der FIFA bestimmt. Wird dabei ein Stollenelement 16 gefunden welches eine Länge von kleiner als 11,0mm aufweist, so wird dieses Stollenelement 16 ersetzt.

In Fig. 3 ist nun ein Beispiel einer erfindungsgemäßen Bodenelement-Prüfeinrichtung 100 zum Testen beispielsweise eines Fußballkunstrasens gezeigt. Ein zu prüfendes Bodenelement 32 ist in Fig. 3 mit einer gestrichelten Linie angedeutet. Gemäß der Erfindung können grundsätzlich unterschiedlichste Arten von Bodenelementen 32 geprüft werden, d.h. z.B. Kunstrasenbodenelemente, sowie Teile des Kunstrasenbodenelements wie z.B. dessen Dämpfungsschicht, ebenso andere Sportbodenbeläge, sowie grundsätzlich auch Naturrasen usw., um nur einige Beispiele zu nennen.

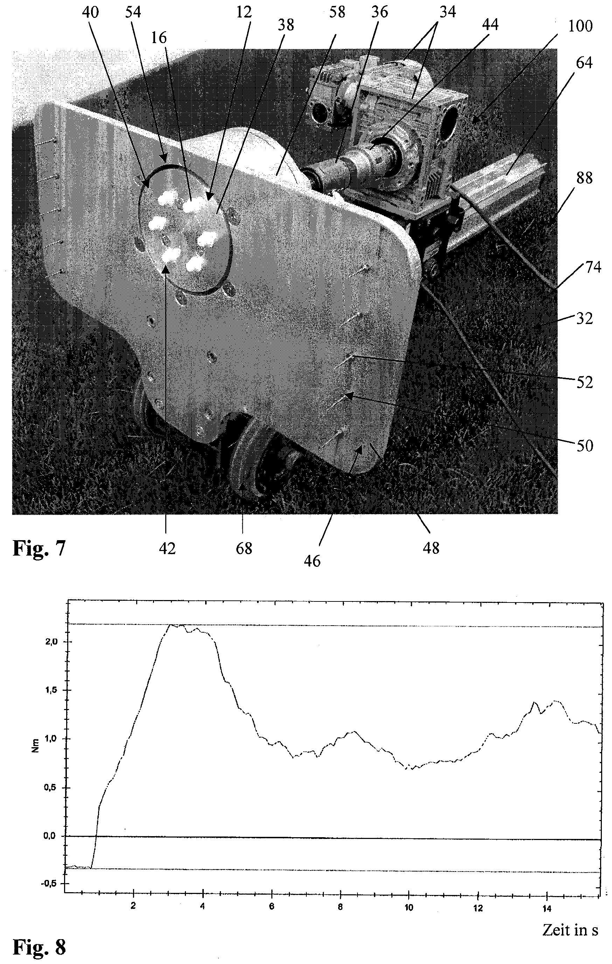

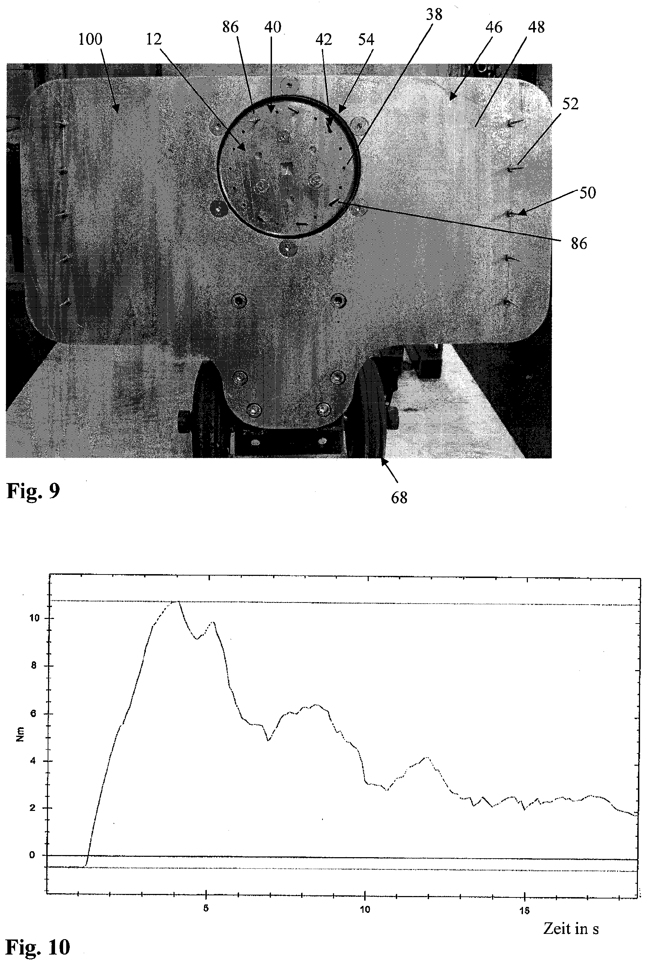

Die Bodenelement-Prüfeinrichtung 100 weist dabei eine Prüfvorrichtung 12 auf, die derart ausgebildet ist, so dass sie zum Testen eines jeweiligen Bodenelements 32, z.B. eines Kunstrasenbodenelements, geeignet ist. Die Prüfvorrichtung 12 ist dabei z.B. drehbar angeordnet und wird über eine Antriebsmotoreinrichtung 34 und eine damit verbundene Getriebeeinheit entsprechend gedreht. Für die Antriebsmotoreinrichtung mit Getriebeeinheit gilt beispielsweise 220V und ±2 U/min bis ±250 U/min. Diese Angaben sind jedoch rein beispielhaft und die Erfindung ist darauf nicht beschränkt. Des Weiteren weist die Bodenelement-Prüfeinrichtung 100 eine entsprechende Messeinrichtung 36 auf, die mit der Prüfvorrichtung 12 verbunden ist. Die Messeinrichtung 36 ist dabei derart ausgebildet, so dass sie als Prüfgröße beispielsweise einen Drehwiderstand bzw. ein Drehmoment, mit welchem die Prüfvorrichtung 12 gedreht wird, den Winkel, um den die Prüfvorrichtung 12 gedreht wird und/oder die Zeitspanne, wie lange die Prüfvorrichtung 12 gedreht wird, bestimmt. Die Messeinrichtung 36 ist dabei vorzugsweise eine elektronische Messeinrichtung 36, welche über eine oder mehrere Sensoren bzw. Sensoreinrichtungen (nicht dargestellt) die Messwerte der jeweiligen Prüfgröße entsprechen erfasst und z.B. an eine damit verbundene Auswerteeinrichtung ausgibt. Als Messeinrichtung 36 zur Messung eines Drehmomentwiderstands bzw. eines Drehmoments kann beispielsweise eine Drehmomentsensoreinrichtung eingesetzt werden. Die erfindungsgemäße Bodenelement-Prüfeinrichtung 100 kann beispielsweise über eine frei wählbare Zeitspanne, die in nachfolgenden Fig. 8 und 10 in einer X/Y-Grafik bzw. Tabelle dargestellt wird, den Drehmomentwiderstand bzw. das Drehmoment bestimmen. Da die Antriebsgeschwindigkeit z.B. konstant gehalten wird, kann über die Zeitschiene der Winkel berechnet werden, um welchen die Prüfvorrichtung 12 gedreht wird. In diesem Fall kann beispielsweise auf eine zusätzliche Sensoreinrichtung verzichtet werden, um den Winkel zu messen, muss aber nicht. Des Weiteren kann die Bodenelement-Prüfeinrichtung 100 neben der Messeinrichtung 36 zusätzlich die Auswerteeinrichtung aufweisen oder mit einer solchen verbindbar sein. Die Auswerteeinrichtung kann dabei derart ausgebildet sein, dass sie beispielsweise die Messergebnisse der Messeinrichtung 36 erfasst, speichert und auswertet und wahlweise zusätzlich beispielsweise in Form eines Diagramms oder einer Tabelle darstellt, wie in nachfolgenden Fig. 8 und 10 gezeigt ist. Die Auswerteeinrichtung ist in Fig. 3 aus Gründen der Übersichtlichkeit nicht dargestellt.

Die Prüfvorrichtung 12 weist beispielsweise ein Prüfplattenelement 38 auf, auf dessen Unterseite 40 wenigstens ein, zwei, drei, vier, fünf, sechs oder mehr Prüfelemente 42 anordenbar sind. Ein Prüfelement 42 ist dabei beispielhaft und stark vereinfacht, sowie rein schematisch in Fig. 3 eingezeichnet. Als Prüfelement 42 kann dabei beispielsweise ein Fußballstollenelement 16 vorgesehen werden, wie es in dem Beispiel in Fig. 2 gezeigt ist, oder auch ein Nagelelement, wie in der nachfolgenden Fig. 9 . Die Prüfelemente 42 können dabei dauerhaft oder auswechselbar an der Prüfvorrichtung 12 bzw. dem Prüfplattenelement 38 befestigt sein. Des Weiteren kann eine Prüfvorrichtung 12 bzw. ein Prüfplattenelement 38 jeweils nur mit einer Art von Prüfelement 42 bestückbar sein, beispielsweise nur mit Fußballstollenelementen 16 als Prüfelement 42 oder mit verschiedenen Prüfelementen 42 bestückbar ausgebildet sein. In letzterem Fall kann die Prüfvorrichtung 12 bzw. das Prüfplattenelement 38 beispielsweise in einem Versuch einmal mit Fußballstollenelementen 16 als Prüfelementen 42 bestückt sein und für einen anderen Versuch mit Nagelelementen als Prüfelementen 42 oder eine Kombination aus Fußballstollenelementen 16 und Nadelelementen, je nach Funktion und Einsatzzweck.

Das Prüfplattenelement 38 ist des Weiteren mit der Messeinrichtung 36 verbunden, beispielsweise einer Drehmomentmesseinrichtung zum Bestimmen eines Drehmoments welches auf das Prüfplattenelement 38 und die daran befestigten Prüfelemente 42 aufgebracht wird. Die Drehmomentsensoreinrichtung kann hierbei beispielsweise ein Drehmoment von beispielsweise -250Nm bis +250Nm erzeugen. Dieser Drehmomentbereich ist rein beispielhaft und kann auch größer oder kleiner als ±250Nm gewählt werden, je nach Funktion und Einsatzzweck. Des Weiteren wird das Prüfplattenelement 38 über die zugeordnete Antriebsmotoreinrichtung 34 und deren Getriebeeinheit bewegt. Die Antriebsmotoreinrichtung 34 weist hierbei beispielsweise einen Motor mit einem Getriebe auf, welches eine Geschwindigkeit von z.B. 2U/Min erzeugt bei einem Drehmoment von bis zu 250Nm oder höher. Die Geschwindigkeit und das Drehmoment sind ebenfalls rein beispielhaft und die Erfindung ist nicht darauf beschränkt.

Die Antriebsmotoreinrichtung 34 ist mit der Messeinrichtung 36 fest verbunden (nicht dargestellt) oder lösbar bzw. kuppelbar verbunden ausgebildet. Hierzu ist als Kupplungseinrichtung 44 z.B. eine Elastikkupplung zwischen der Antriebsmotoreinrichtung 34 und der Messeinrichtung 36 vorgesehen. Entsprechend kann die Messeinrichtung 36 auch mit der Prüfvorrichtung 12 entweder fest verbunden (nicht dargestellt) oder kuppelbar ausgebildet sein. Dabei kann als Kupplungseinrichtung 44 ebenfalls z.B. eine Elastikkupplung zwischen der Messeinrichtung 36 und der Prüfvorrichtung 12 vorgesehen sein. Die Kupplungseinrichtungen 44 dienen dabei der Zerlegbarkeit der Bodenelement-Prüfeinrichtung 100 in Einzelteile, um diese leichter transportieren zu können. Auf eine oder beide Kupplungseinrichtungen 44 kann daher auch verzichtet werden, je nach Funktion oder Einsatzzweck.

In dem Beispiel, wie es in Fig. 3 gezeigt ist, weist die Bodenelement-Prüfeinrichtung 100 zusätzlich eine Fixierungsvorrichtung 46 auf. Die Fixierungsvorrichtung 46 dient dazu, die Bodenelement-Prüfeinrichtung 100 zunächst in einer Sollposition zu fixieren, so dass sich die Bodenelement-Prüfeinrichtung 100 nicht ungewollt aus ihrer Sollposition herausbewegt, z.B. seitlich verschiebt. Die Fixierungsvorrichtung 46 weist hierzu z.B. eine Grundplatte 48 auf, auf deren Unterseite wenigstens ein oder mehrere Fixierungselemente 50 angeordnet sind, beispielsweise mehrere Nadelelemente 52. Ein Nadelelement 52 als Fixierungselement 50 ist beispielhaft in Fig. 3 eingezeichnet. Das Nadelelement 52 ist dabei stark vereinfacht und rein schematisch in Fig. 3 dargestellt. Diese Nadelelemente 52 haben die Funktion sich in das zu untersuchende Bodenelement 32 zu bohren oder darin einzugreifen und somit zu verhindern, dass sich die Prüfeineinrichtung 100 ungewollt aus deren Sollposition bewegen kann. Die Nadelelemente 52 sind dabei z.B. aus Metall und weisen dabei beispielsweise jeweils einen Durchmesser von 3mm auf und eine Länge von 30mm. Es kann aber auch jeder andere Durchmesser bzw. jede andere Länge für die Nadelelemente 52 gewählt werden. Des Weiteren können die Fixierungselemente 50, hier z.B. die Nadelelemente 52, identisch oder unterschiedliche hinsichtlich Form, Material und/oder Dimensionierung ausgebildet sein. Die Grundplatte 48 ist hierbei im Gegensatz zu der Prüfvorrichtung 12 bzw. deren Prüfplattenelement 38 nicht drehbar vorgesehen sondern fest und weist, wie in Fig. 3 gezeigt ist, z.B. eine Öffnung 54 auf, in welcher die Prüfvorrichtung 12 bzw. das Prüfplattenelement 38 angeordnet ist.

Das Prüfplattenelement 38 ist z.B. mit einer Messkopfeinrichtung 56 verbunden, beispielsweise verschraubt, und in einem Lagergehäuse 58 drehbar gelagert. Die Lagerung 57 in Fig. 3 ist dabei stark vereinfacht und rein schematisch dargestellt. Die Lageranordnung kann dabei eine Axiallageranordnung aufweisen, beispielsweise in Form zweier Axiallager. Die Erfindung ist aber nicht auf diese Form und Anordnung der Lagerung beschränkt. Es kann jede andere geeignete Lagerung vorgesehen werden. Das Lagergehäuse 58 ist des Weiteren z.B. an der Fixierungsvorrichtung 46 bzw. deren Grundplatte 48 befestigt, beispielsweise ebenfalls mittels Schrauben 60. Dabei ist, wie in Fig. 3 gezeigt ist, die Prüfvorrichtung 12 bzw. das Prüfplattenelement 38 gegenüber der Fixierungsvorrichtung 46 bzw. der Grundplatte 48 etwas nach innen versetzt, beispielsweise um 2mm nach innen versetzt. Das Prüfplattenelement 38 schließt jedoch erfindungsgemäß mit der Grundplatte 48 bündig ab. Auf der anderen Seite des Lagergehäuses 58, kann dieses mit einem Lagerdeckel 62 verschlossen ausgebildet sein, wobei der Lagerdeckel 62, wie in dem Beispiel in Fig. 3 gezeigt ist, an dem Lagergehäuse 58 z.B. festgeschraubt ist.

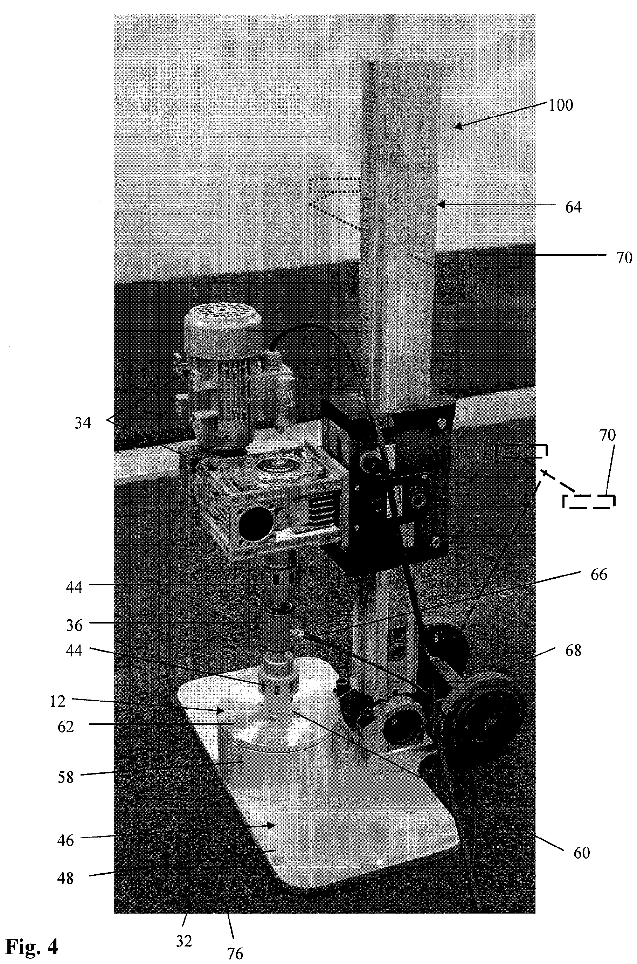

Fig. 4 zeigt eine perspektivische Ansicht einer weiteren Ausführungsform der erfindungsgemäßen Bodenelement-Prüfeinrichtung 100. Die Bodenelement-Prüfeinrichtung 100, wie sie in Fig. 4 gezeigt ist, unterscheidet sich dabei von der Bodenelement-Prüfeinrichtung gemäß Fig. 3 dadurch, dass zusätzlich eine Radeinrichtung 100 mit einer Halterungseinrichtung 64 vorgesehen ist, zum Bewegen bzw. Rollen der Bodenelement-Prüfeinrichtung 100. Die übrigen Elemente, d.h. die Prüfvorrichtung 12, die Messeinrichtung 36, die Antriebsmotoreinrichtung 34, die beiden Kupplungseinrichtungen 44 und die Fixierungsvorrichtung 46, sind identisch mit der Bodenelement-Prüfeinrichtung 100 gemäß Fig. 3 und werden daher hier nicht wiederholt. Die Antriebsmotoreinrichtung 34 ist in dem Beispiel in Fig. 4 über ein Kabel 66 an ein Stromnetz anschließbar. Es ist aber auch möglich alternativ oder zusätzlich die Antriebsmotoreinrichtung 34 über eine Batterieeinrichtung und/oder Akkueinrichtung (nicht dargestellt) mit Energie speisbar auszubilden oder als Brennkraftmaschine auszubilden usw., um nur einige Beispiele zu nennen. Des Weiteren weist die Bodenelement-Prüfeinrichtung 100 neben der Messeinrichtung 36 eine Auswerteeinrichtung auf (nicht dargestellt) oder die Messeinrichtung 36 ist mit einer externen Auswerteeinrichtung verbindbar zum Auswerten der von der Messeinrichtung 36 erfassten Messergebnisse.

Wie in Fig. 4 gezeigt ist, weist die Bodenelement-Prüfeinrichtung 100 zusätzlich eine Halterungseinrichtung 64 auf, mit einer Radeinrichtung 68 am unteren Ende zum Rollen der gesamten Bodenelement-Prüfeinrichtung 100. Dabei ist des Weiteren wahlweise zusätzlich eine Griffeinrichtung 70 vorgesehen, welche z.B. an der Radeinrichtung 68 oder der Halterungseinrichtung 64 befestigt werden kann, zum bequemeren Bewegen bzw. Rollen der Bodenelement-Prüfeinrichtung 100. Die beiden Beispiele für die Griffeinrichtung 70 in Fig. 4 , die einmal mit einer gestichelten Linie und einmal mit einer gepunkteten Linie eingezeichnet sind, sind dabei nicht maßstäblich sondern stark vereinfacht und rein schematisch dargestellt.

Die Halterungseinrichtung 64 dient in Fig. 4 zum Halten der Antriebsmotoreinrichtung 34 und der damit verbundenen Messeinrichtung 36 und Prüfvorrichtung 12. Die Fixierungsvorrichtung 46 ist in Fig. 4 beispielsweise mit der Radeinrichtung 68 und/oder der Halterungseinrichtung 64 verbunden und fest. Die Prüfvorrichtung 12 und wahlweise zusätzlich mit ihre die Messeinrichtung 36 und die Fixierungsvorrichtung 46 können aber auch derart vorgesehen werden (nicht dargestellt), dass sie entlang der Halterungseinrichtung 64 nach oben und unten z.B. mittels der Antriebsmotoreinrichtung 34 oder von Hand bewegbar sind. Hierzu ist die Fixierungsvorrichtung 46 allerdings nicht fest mit der Halterungseinrichtung 64 und der Radeinrichtung 68 verbunden. Auf diese Weise kann die Prüfvorrichtung 12 und die Fixierungsvorrichtung 46, wie zuvor mit Bezug auf Fig. 1 beschrieben wurde, beispielsweise aus einer vorbestimmten Höhe von z.B. 60mm ±5mm auf das zu prüfende Bodenelement 32 abgesenkt werden. Grundsätzlich kann die erfindungsgemäße Bodenelement-Prüfeinrichtung 100 auch komplett auf dem zu prüfende Bodenelement abgesetzt werden. Dies gilt für alle Ausführungsformen der Erfindung. Die Prüfvorrichtung 12 muss nicht unbedingt separat abgesenkt werden, kann aber prinzipiell absenkbar ausgebildet werden, je nach Funktion und Einsatzzweck.

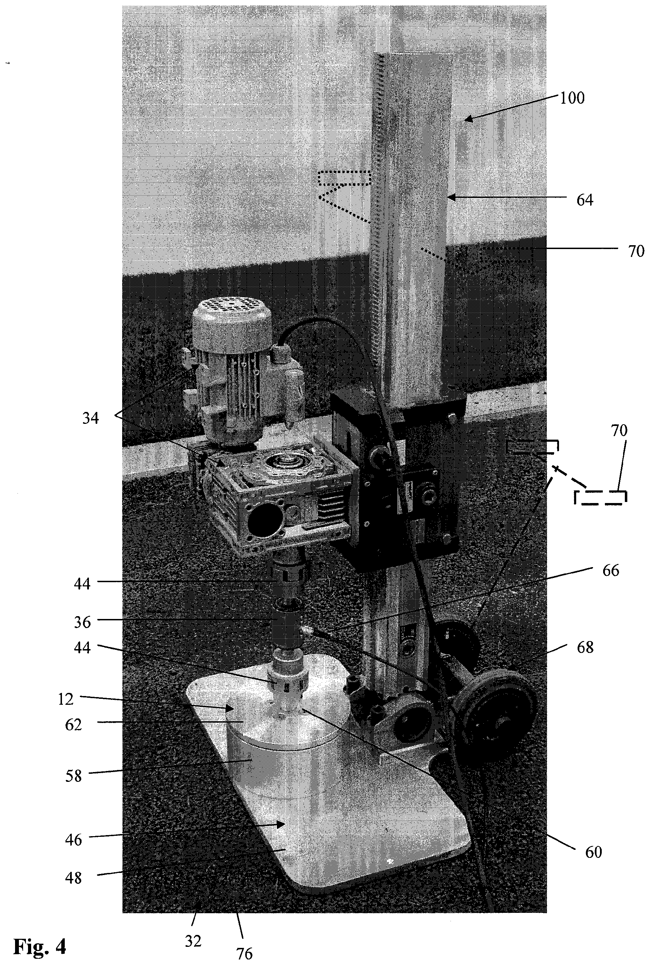

Des Weiteren sind die beiden Bodenelement-Prüfeinrichtungen 100, wie sie in Fig. 3 und 4 gezeigt sind, so ausgebildet, dass sie ein vorbestimmtes Gesamtgewicht aufweisen, von z.B. 46kg ±2kg gemäß der Vorgabe des FIFA-Handbuchs. Dabei können je nach Bedarf wahlweise zusätzlich Gewichte (nicht dargestellt) an der Bodenelement-Prüfeinrichtung 100 vorgesehen werden, um ein vorbestimmtes Gesamtgewicht bereitzustellen, vergleichbar der Bodenelement-Prüfeinrichtung 10 gemäß Fig. 1 . Des Weiteren ist die Bodenelement-Prüfeinrichtung 100 in Fig. 4 auf einer Dämpfungsschicht 76 als Bodenelement 32 angeordnet und in den Fig. 5 und 7 auf einem Kunstrasenbodenelement 32, wobei die oberste Kunstrasenschicht 74 des Kunstrasens 88 in den Fig. 5 und 7 zu sehen ist. Der Aufbau des Kunstrasens 88 bzw. des Kunstrasenbodenelements 32 wird im nachfolgenden anhand eines Beispiels in Fig. 6 noch näher erläutert.

In Fig. 5 ist nun die Bodenelement-Prüfeinrichtung 100 gemäß Fig. 4 gezeigt, wobei die Bodenelement-Prüfeinrichtung 100 mit einer externen Auswerteeinrichtung 72 verbunden ist, z.B. einem Labtop oder PC (nicht dargestellt) mit einem oder mehreren Programmen zum Erfassen und Auswerten von Messwerten der Messeinrichtung 36, sowie einer Speichereinrichtung zum Abspeichern der Ergebnisse und einer Anzeigeeinrichtung, hier Bildschirm, zum Anzeigen bzw. Darstellen der Messewerte und/oder der Auswerteergebnisse usw.. Die Griffeinrichtung ist hierbei nicht gezeigt. In Fig. 5 ist die erfindungsgemäße Bodenelement-Prüfeinrichtung 100 auf einem Kunstrasenbodenelement 32 als zu prüfendem Bodenelement 32 angeordnet, um als Prüfgröße beispielsweise den Drehwiderstand des Bodenelements 32 zu prüfen. Dabei ist in Fig. 5 die oberste Kunstrasenschicht 74 des Kunstrasenbodenelements 32 zu sehen.

In Fig. 6 ist eine schematische Schnittansicht durch ein Beispiel für einen Kunstrasen 88 gezeigt, der ein zu untersuchendes Kunstrasenbodenelement 32 bildet. Ein solches Kunstrasenbodenelement 32 kann mit der erfindungsgemäßen Bodenelement-Prüfeinrichtung 100 gemäß der Fig. 3-5 und 7 getestet bzw. geprüft werden. Das Kunstrasenbodenelement 32 weist als oberste Lage die Kunststoffrasenschicht bzw. Kunstrasenschicht 74 auf. Unter dieser Lage aus Kunstrasen 74 ist z.B. eine elastische Schicht bzw. die Dämpfungsschicht 76 vorgesehen. Die Dämpfungsschicht 76 wird hierbei beispielsweise "in situ" eingebracht. D.h. die Dämpfungsschicht 76 wird zunächst als eine Art flüssige oder pastöse Schicht aufgebracht und anschließend ausgehärtet. Die Dämpfungsschicht 76 weist hierbei z.B. ein elastisches Material, wie Polyurethan oder ein anderes gummiartiges Material, auf und ein Bindemittel. Grundsätzlich kann die Dämpfungsschicht 76 auch als vorgefertigte feste Schicht aufgebracht werden usw..

Unter der Dämpfungsschicht 76 kann wahlweise zusätzlich eine Ausgleichsschicht 78 vorgesehen werden, zum Ausgleich von z.B. Höhenunterschieden. Unter der Ausgleichsschicht 78 ist des Weiteren eine Schicht 80 aus verdichtetem bzw. komprimierten Kies bzw. Schotter und Sand vorgesehen. Diese Schicht 80 aus Kies und Sand bildet eine ungebundene Tragschicht. Anschließend folgen wahlweise zusätzlich eine Filterschicht 82 und dann eine Schicht 84 aus komprimierter Erde.

Mittels der erfindungsgemäßen Bodenelement-Prüfeinrichtung 100 kann nun einerseits z.B. die oberste Kunstrasenschicht 74 bzw. der gesamte Kunstrasen 32 getestet werden und des Weiteren beispielsweise die Dämpfungsschicht 76 darunter usw..

In Fig. 7 ist eine perspektivische Ansicht der Bodenelement-Prüfeinrichtung 100 gemäß Fig. 4 von unten gezeigt. Die Bodenelement-Prüfeinrichtung 100 ist dabei auf einem Kunstrasenbodenelement 32 abgelegt, wobei die oberste Kunstrasenschicht 76 zu sehen ist. Die Prüfvorrichtung 12 der erfindungsgemäßen Bodenelement-Prüfeinrichtung 100 ist dabei mit mehreren Prüfelementen 42 in Form von Fußballstollenelementen 16 bestückt und in einer Öffnung 54 der Fixierungsvorrichtung 46 bzw. der Grundplatte 48 angeordnet.

Die Fixierungsvorrichtung 46 bzw. Grundplatte 48 der Bodenelement-Prüfeinrichtung 100 in Fig. 7 weist dabei auf jeder Seite eine Reihe von Fixierungselementen 50 in Form von z.B. Nadeln, Nägeln oder Stiften auf. Genauer gesagt sind in jeder Reihe beispielsweise jeweils fünf Nadeln bzw. Nadelelemente 52 angeordnet. Die Nadelelemente 42 sind dabei ausreichend lang, um sich in das zu prüfende Bodenelement 32, hier ein Kunstrasenbodenelement 32, zu bohren. Die Fixierungselemente 50 können dabei nicht nur in einer Reihe auf der Grundplatte 48 angeordnet werden, sondern in jeder beliebigen Position, sofern dadurch im Wesentlichen eine Fixierung der Grundplatte 48 erreicht wird bzw. ein ungewolltes Verschieben der Bodenelement-Prüfeinrichtung 100 verhindert wird.

Auf der Unterseite der Prüfvorrichtung 12 bzw. des Prüfplattenelements 38 sind des Weiteren, wie zuvor ausführlich mit Bezug auf die Fig. 1 und 2 und die Vorgaben der FIFA beschrieben wurde, sechs Fußballstollenelemente 16 kreisförmig und gleichmäßig verteilt angeordnet. Die Fußballstollenelemente 36 als Prüfelemente entsprechen 42 dabei beispielsweise dem Fußballstollenelement 16, wie es in Fig. 2 gezeigt und durch die FIFA vorgegeben ist. Die Fußballstollenelemente 16 sind vorzugsweise lösbar an dem Prüfplattenelement 38 befestigt und können dort beispielsweise eingesteckt und/oder eingeschraubt werden. Mittels der Fußballstollenelemente 16 soll z.B. eine Art Fußballschuh simuliert werden, vergleichbar der zuvor anhand der Fig. 1 beschriebenen Testfußeinrichtung 12 der FIFA. Dabei soll, wie zuvor beschrieben, gemäß den Testvorgaben der FIFA ein Drehwiderstand der Prüfelemente 42 auf dem Kunstrasenbodenelement 32 gemessen werden. Die Drehwiderstandsbestimmung kann dazu verwendet werden, um eine Belastung der Sehnen und Gelenke von Fußballern beim Spiel auf einem solchen Kunststoffrasen 32 abzuschätzen.

Um nun den Drehwiderstand eines Kunstrasenbodenelements 32 zu bestimmen, wird die Bodenelement-Prüfeinrichtung 100 an einer vorbestimmten Position auf dem Kunstrasenbodenelement 32 platziert. Dabei wird die Bodenelement-Prüfeinrichtung 100 über die Fixierungsvorrichtung 46 bzw. die Grundplatte 48 und wenigstens ein oder mehrere Fixierungselemente 50 auf dem Kunstrasenbodenelement 32 fixiert, so dass sich die Bodenelement-Prüfeinrichtung 100 während der jeweiligen Testreihe nicht ungewollt verschieben kann. Ist die Prüfvorrichtung 12 beweglich an der Halterungseinrichtung 64 befestigt, wie zuvor beschrieben wurde, so kann diese auch aus einer vorbestimmten Höhe auf das zu prüfende Kunstrasenbodenelement 32 herabgelassen werden, wie in dem Versuch der FIFA der zuvor mit Bezug auf Fig. 1 beschrieben wurde.

Dann wird das Prüfplattenelement 38 über die Antriebsmotoreinrichtung 34 mit einer vorgeschriebenen Geschwindigkeit oder einem vorgeschrieben Geschwindigkeitsverlauf gedreht. Hierzu wird die Antriebsmotoreinrichtung 34 mit der Messeinrichtung 36 und dem Prüfplattenelement 38 der Prüfvorrichtung 12 über die beiden Kupplungseinrichtungen 44 gekuppelt. Dabei kann die Prüfvorrichtung 12 bzw. das Prüfplattenelement 38 z.B. bis zu einem vorbestimmten Winkel oder bis zum Ablauf einer vorbestimmten Zeitspanne mit der vorgegebenen Geschwindigkeit gedreht werden.

Über die Messeinrichtung 36 wird während des Versuchs hierbei z.B. der Drehwiderstand als Prüfgröße bestimmt. In einer oder mehreren Testreihen kann dann beispielsweise ein durchschnittlicher maximaler Drehwiderstand bestimmt werden. Grundsätzlich ist dies lediglich ein Beispiel für die Durchführung eines Testversuchs mit der erfindungsgemäßen Bodenelement-Prüfeinrichtung 100. Es ist für den Durchschnittsfachmann offensichtlich, dass unterschiedlichste Versuche und Versuchsdurchführungen mit der erfindungsgemäßen Bodenelement-Prüfeinrichtung 100 durchgeführt werden können, insbesondere aber der Drehwiderstandsversuch gemäß der FIFA, wie er in dem zuvor genannten FIFA-Handbuch beschrieben ist und mit Bezug auf die Fig. 1 und 2 erläutert wird.

In Fig. 8 ist ein Diagramm einer Messung eines Bodenelementes vom Typ "Ligaturf Showroom" mittels der Bodenelement-Prüfeinrichtung gemäß Fig. 4 , 5 und 7 gezeigt. Dabei wurde die erfindungsgemäße Bodenelement-Prüfeinrichtung mit sechs Fußballstollenelementen, wie zuvor beschrieben, auf ein Kunstrasenbodenelement des Typs "Ligaturf Showroom" aufgesetzt und dann das Prüfplattenelement mit den Fußballstollenelementen mit einer vorbestimmten Geschwindigkeit mittels der Antriebsmotoreinrichtung gedreht. Dabei wurde über die Messeinrichtung der Drehwiderstand des Prüfplattenelements und seiner Prüfelemente auf dem Kunstrasenbodenelement während der Testreihe bestimmt und in einem angeschlossenen Rechner als Auswerteeinrichtung abgespeichert und in Form eines Diagramms aufgezeichnet. Dabei wurde ein minimaler Drehwiderstand von beispielsweise -0,34Nm erfasst und ein maximaler Drehwiderstand von +2,19Nm. Insgesamt wurden von der Messeinrichtung 157 Messwerte bei einer Testreihe erfasst und in dem Diagramm in Fig. 8 dargestellt. Die Messdauer betrug insgesamt 15 Sekunden. Des Weiteren betrug der Spitze-Spitze Wert +2,53Nm.

Fig. 9 zeigt eine Ansicht der Unterseite der Bodenelement-Prüfeinrichtung 100 gemäß Fig. 4 , wobei als Prüfelemente 42 statt Fußballstollenelementen diesmal Nagelelemente 86 auf der Prüfvorrichtung 12 bzw. dem Prüfplattenelement 38 vorgesehen sind.

Die Nagelelemente 86 als Prüfelemente 42 werden z.B. dazu eingesetzt, um einen Traktionstest durchzuführen. Hier geht es um die Prüfung insbesondere der elastischen Unterbauschichten eines Kunstrasenbodenelements 32, wie beispielsweise der Dämpfungsschicht 76 in Fig. 4 . Die Dämpfungsschicht 76 muss beispielsweise Tritte der Spieler ebenso wie z.B. den Sturz eines Spielers abfedern. An dem Prüfplattenelement 38 sind für den Traktionstest, wie in Fig. 9 gezeigt ist, beispielsweise sechs Nagelelemente 86 vorgesehen, die auf einem Kreis gegenüberliegend angeordnet sind. Es können beliebig viele Nagelelemente 86 vorgesehen werden, je nach Funktion und Einsatzzweck. Die Nagelelemente 86 sind beispielsweise aus Metall, z.B. gehärtete Stahlstifte bzw. Stahlnägel, und weisen einen Durchmesser von z.B. jeweils 3mm auf und eine Länge von 20mm oder 30mm auf, bzw. eine Länge die in einem Bereich von 20mm bis 30mm liegt. Es kann aber auch jeder andere Durchmesser bzw. jede andere Länge für die Nagelelemente 86 gewählt werden. Des Weiteren können die Nagelelemente 86 identisch oder unterschiedlich hinsichtlich z.B. Form, Material, Orientierung und/oder Dimensionierung ausgebildet sein. Die Nagelelemente 86 können z.B. senkrecht zu der Unterseite 40 des Prüfplattenelements 38 angeordnet sein oder in jedem anderen Winkel, beispielsweise von 60°, wobei dieser Wert rein beispielhaft ist und die Erfindung nicht darauf beschränkt ist. Des Weiteren können wenigstens zwei oder mehr oder alle Nagelelemente 86 den gleichen Winkel und/oder Orientierung zu der Unterseite 40 des Prüfplattenelements 38 aufweisen oder einen unterschiedlichen Winkel und/oder Orientierung. In dem Beispiel, wie es in Fig. 9 . gezeigt ist, weisen alle Nagelelemente 86 den gleichen Winkel zu der Unterseite 40 des Prüfplattenelements 38 auf. Des Weiteren sind auch alle Nagelelemente 86 in der gleichen Richtung auf dem Prüfplattenelement 38 orientiert, d.h. in dem Beispiel in Fig. 9 leicht nach außen gerichtet. Einige Nagelelemente 86 können aber auch nach innen orientiert bzw. gerichtet sein und andere wieder nach außen usw.. Neben Nagelelementen 86 könne hierbei auch z.B. Stiftelemente oder Nadelelemente usw. verwendet werden.

Zur Prüfung der Dämpfungsschicht 76 wird die Bodenelement-Prüfeinrichtung 100 direkt auf der freien oder freigelegten Dämpfungsschicht 76 platziert bzw. positioniert, wie beispielsweise in Fig. 4 gezeigt ist, und nicht auf der Kunstrasenschicht 74, wie in den Fig. 5 und 7 .

Zur Bestimmung des Drehwiderstands beim Traktionstest des Dämpfungsbodenelements 32, wird die Bodenelement-Prüfeinrichtung 100 an einer vorbestimmten Position auf dem Dämpfungsbodenelement 32 positioniert. Hierbei wird die Bodenelement-Prüfeinrichtung 100 über die Fixierungsvorrichtung 46 bzw. Grundplatte 48 und wenigstens ein oder mehrere Fixierungselemente 50 auf dem Dämpfungsbodenelement 32 fixiert, so dass sich die Bodenelement-Prüfeinrichtung 100 während der jeweiligen Testreihe nicht ungewollt bewegen kann. Bei dem jeweiligen Test wird nun das Prüfplattenelement 38 über die Antriebsmotoreinrichtung mit einer vorgeschriebenen Geschwindigkeit oder einem vorgeschriebenen Geschwindigkeitsverlauf gedreht. Dazu wird die Antriebsmotoreinrichtung mit der Messeinrichtung und der Prüfvorrichtung 12 bzw. dem Prüfplattenelement 38 über die beiden Kupplungseinrichtungen gekuppelt. Wie zuvor beschrieben, kann das Prüfplattenelement 38 z.B. bis zu einem vorbestimmten Winkel oder bis zum Ablauf einer vorbestimmten Zeitspanne mit der vorgegebenen Geschwindigkeit gedreht werden. Die Messeinrichtung bestimmt hierbei nun im vorliegenden Fall z.B. den Drehwiderstand als eine Prüfgröße. Dabei kann in mehreren Testreihen z.B. jeweils der maximale und/oder minimale Drehwiderstand bestimmt werden und daraus ein entsprechender Durchschnittswert. Es ist für den Durchschnittsfachmann offensichtlich, dass unterschiedlichste Versuche und Versuchsdurchführungen mit der erfindungsgemäßen Bodenelement-Prüfeinrichtung 100 durchgeführt werden können für unterschiedlichste Bodenelemente 32 oder Teile von Bodenelementen.

In Fig. 10 ist ein Diagramm einer Messung eines Bodenelementes vom Typ "Elastikschicht Showroom" mittels der Bodenelement-Prüfeinrichtung gemäß Fig. 9 gezeigt. Bei dieser Testreihe wurde die erfindungsgemäße Bodenelement-Prüfeinrichtung 100 mit sechs Nagelelementen 86 als Prüfelementen 42 eingesetzt, wie in Fig. 9 dargestellt. Die Bodenelement-Prüfeinrichtung wurde dabei zunächst auf einem Dämpfungsbodenelement des Typs "Elastikschicht Showroom" positioniert und aufgesetzt. Anschließend wurde das Prüfplattenelement mit den Nagelelementen mit einer vorbestimmten Geschwindigkeit mittels der Antriebsmotoreinrichtung gedreht. Hierbei wurde über die Messeinrichtung der Drehwiderstand des Prüfplattenelements und seiner Prüfelemente auf dem Dämpfungsbodenelement während der Testreihe bestimmt und in einem angeschlossenen Rechner als Auswerteeinrichtung abgespeichert und in Form eines Diagramms aufgezeichnet. Hierbei wurde ein minimaler Drehwiderstand von - 0,50Nm erfasst und ein maximaler Drehwiderstand von +10,76Nm. Insgesamt wurden von der Messeinrichtung 187 Messwerte erfasst und in dem Diagramm in Fig. 10 dargestellt. Die Messdauer betrug insgesamt 18 Sekunden. Des Weiteren betrug der Spitze-Spitze Wert +11,26Nm.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

### Bezugszeichenliste

- 10: Bodenelement-Prüfeinrichtung (Stand der Technik)
- 100: Bodenelement-Prüfeinrichtung (Erfindung)
- 12: Prüfvorrichtung
- 14: Scheibe
- 16: Fußballstollenelement
- 18: Welle
- 20: Hebegriff
- 22: Drehmomentschlüssel
- 24: Gewicht
- 26: Dreibein
- 28: Führung
- 30: Halte- und Absenkeinrichtung
- 32: Bodenelement
- 34: Antriebseinrichtung bzw. Antriebsmotoreinrichtung
- 36: Messeinrichtung
- 38: Prüfplattenelement
- 40: Unterseite (Prüfplattenelement)
- 42: Prüfelement
- 44: Kupplungseinrichtung
- 46: Fixierungsvorrichtung
- 48: Grundplatte
- 50: Fixierungselement
- 52: Nadelelement
- 54: Öffnung
- 56: Messkopfeinrichtung
- 57: Lagerung
- 58: Lagergehäuse
- 60: Schraube
- 62: Lagerdeckel
- 64: Halterungseinrichtung
- 66: Kabel
- 68: Radeinrichtung
- 70: Griffeinrichtung
- 72: Auswerteeinrichtung
- 74: Kunststoffrasenschicht
- 76: Dämpfungsschicht
- 78: Ausgleichsschicht
- 80: Schicht aus Kies
- 82: Filterschicht
- 84: Schicht aus komprimierter Erde
- 86: Nadelelement
- 88: Kunstrasen

## Patentansprüche

1. Bodenelement-Prüfeinrichtung (100) zum Prüfen eines Bodenelements (32), insbesondere eines Kunstrasenbodenelements (32), wobei die Bodenelement-Prüfeinrichtung (100) aufweist:
- eine Prüfvorrichtung (12, 38), die ein Prüfplattenelement (38) aufweist, an dessen Unterseite (40) wenigstens ein oder mehrere Prüfelemente (16, 86) angeordnet ist,
- eine Fixierungsvorrichtung (46) zum Fixieren der Bodenelement-Prüfeinrichtung (100) in einer vorbestimmten Position auf dem Bodenelement (32), wobei die Fixierungsvorrichtung (46) ein Grundplattenelement (48) aufweist, an dessen Unterseite mehrere Fixierungselemente (50) angeordnet sind,
- eine Antriebsmotoreinrichtung (34) zum Bewegen der Prüfvorrichtung (12, 38), und
- eine Messeinrichtung (36) zum Bestimmen wenigstens einer oder mehrerer Prüfgrößen,
**dadurch gekennzeichnet, dass**
die Unterseite (40) des Prüfplattenelements (38) gegenüber der Unterseite des Grundplattenelements (48) bündig angeordnet ist.

2. Prüfeinrichtung nach Anspruch 1,
**dadurch gekennzeichnet,**
**dass** die Messeinrichtung (36) als Prüfgröße einen Drehwiderstand, einen Drehwinkel, um welchen die Bodenelement-Prüfeinrichtung (100) gedreht wird, eine Länge, um welche die Bodenelement-Prüfeinrichtung (100) in axialer Richtung bewegt wird und/oder eine Zeitspanne innerhalb welcher die Bodenelement-Prüfeinrichtung (100) bewegt wird bestimmt.

3. Bodenelement-Prüfeinrichtung nach Anspruch 1 oder 2,
**dadurch gekennzeichnet,**
**dass** das jeweilige Prüfelement (42) ein Nagelelement (86), ein Stiftelement, ein Nadelelement oder ein Fußballstollenelement (36) ist, wobei das Prüfelement (42) an der Prüfvorrichtung (12, 38) nicht auswechselbar oder auswechselbar befestigt ist.

4. Bodenelement-Prüfeinrichtung nach wenigstens einem der Ansprüche 1 bis 3,
**dadurch gekennzeichnet,**
**dass** das Fixierungselement (50) ein Nadelelement (52) ist und das Grundplattenelement (48) eine Öffnung (54) aufweist in welcher die Prüfvorrichtung (12, 38) angeordnet ist.

5. Bodenelement-Prüfeinrichtung nach einem der Ansprüche 1 bis 4,
**dadurch gekennzeichnet,**
**dass** die Prüfvorrichtung (12, 38) mittels der Antriebsmotoreinrichtung (34) mit einer vorbestimmten Geschwindigkeit oder einem vorbestimmten Geschwindigkeitsverlauf drehbar und/oder in axialer Richtung verschiebbar ist, wobei die Geschwindigkeit konstant oder variabel ist.

6. Bodenelement-Prüfeinrichtung nach wenigstens einem der Ansprüche 1 bis 5,
**dadurch gekennzeichnet,**
**dass** die Prüfvorrichtung (12, 38) über eine Kupplungseinrichtung (44) mit der Messeinrichtung (36) kuppelbar ist und/oder die Antriebseinrichtung (34) mit der Messeinrichtung (36) über eine Kupplungseinrichtung (44) kuppelbar ist.

7. Bodenelement-Prüfeinrichtung nach wenigstens einem der Ansprüche 1 bis 6,
**dadurch gekennzeichnet,**
**dass** die Prüfvorrichtung (12, 38) in einem Lagegehäuse (58) drehbar gelagert ist, wobei das Prüfplattenelement (38) wahlweise zusätzlich mit einer Messkopfeinrichtung (56) verbunden ist und wobei die Prüfvorrichtung (12, 38) nicht auswechselbar oder auswechselbar an der Bodenelement-Prüfeinrichtung (100) befestigt ist.

8. Bodenelement-Prüfeinrichtung nach wenigstens einem der Ansprüche 1 bis 7,
**dadurch gekennzeichnet,**
**dass** die Bodenelement-Prüfeinrichtung (100) eine Halterungseinrichtung (64) aufweist, wobei die Halterungseinrichtung (64) beispielsweise mit der Antriebsmotoreinrichtung (34) verbunden ist und wobei die Halterungseinrichtung (64) beispielsweise eine Radeinrichtung (68) aufweist, zum Bewegen bzw. Rollen der Bodenelement-Prüfeinrichtung (100) und wobei die Radeinrichtung (68) oder die Halterungseinrichtung (64) beispielsweise mit einer Griffeineinrichtung (70) versehen ist.

9. Bodenelement-Prüfeinrichtung nach Anspruch 10,
**dadurch gekennzeichnet,**
**dass** die Prüfvorrichtung (12, 38) entlang der Halterungseinrichtung (64) mittels der Antriebseinrichtung (34) und/oder von Hand hin-und her in axialer Richtung beweglich ist oder in axialer Richtung fest ist.

10. Bodenelement-Prüfeinrichtung nach wenigstens einem der Ansprüche 1 bis 9,
**dadurch gekennzeichnet,**
**dass** die Bodenelement-Prüfeinrichtung (100) eine Auswerteeinrichtung (72) aufweist oder mit dieser verbindbar ist zum Auswerten von Messergebnissen der Messeinrichtung (36).

11. Prüfvorrichtung für eine Bodenelement-Prüfeinrichtung nach einem der Ansprüche 1 bis 10,
**dadurch gekennzeichnet,**
**dass** die Prüfvorrichtung (12, 38) ein Prüfplattenelement (38) aufweist mit wenigstens einem oder mehreren Prüfelementen (42, 16, 86) auf der Unterseite (40), wobei das Prüfplattenelement (38) beispielsweise als eine auswechselbare Scheibe ausgebildet ist, wobei die Prüfelemente (42, 16, 86) in einem gleichen Abstand oder unterschiedlichen Abstand zueinander auf der Unterseite (40) des Prüfplattenelements (38) angeordnet sind, und wobei das jeweilige Prüfelement (42) ein Nagelelement (86), ein Fußballstollenelement (16), ein Stiftelement und/oder ein Nadelelement ist.

12. Prüfvorrichtung für eine Bodenelement-Prüfeinrichtung nach Anspruch 11,
**dadurch gekennzeichnet,**
**dass** das jeweilige Prüfelement (42, 86) in einem vorbestimmten Winkel und/oder einer vorbestimmten Orientierung zu der Unterseite (40) des Prüfplattenelements (38) angeordnet ist, wobei der Winkel in einem Bereich größer 0° und kleiner 180° liegt und wobei die Winkel und/oder die Orientierung von zwei oder mehr Prüfelementen (42, 86) gleich oder unterschiedlich ist.

13. Verfahren zur Prüfung eines Bodenelements mit einer Bodenelement-Prüfeinrichtung gemäß einem der Ansprüche 1 bis 12, wobei das Verfahren die Schritte aufweist:
- Positionieren der Bodenelement-Prüfeinrichtung (100) an einer vorbestimmten Position des Bodenelements (32) durch eine Fixierungsvorrichtung (46) zum Fixieren der Bodenelement-Prüfeinrichtung (100) auf dem Bodenelement (32), wobei die Fixierungsvorrichtung (46) ein Grundplattenelement (48) aufweist, an dessen Unterseite mehrere Fixierungselemente (50) angeordnet sind,
- Drehen der Bodenelement-Prüfeinrichtung (100) bzw. der Prüfvorrichtung (12, 38) mittels der Antriebsmotoreinrichtung (34), und
- Bestimmen wenigstens einer oder mehrerer Prüfgrößen.

14. Verfahren nach Anspruch 13,
**dadurch gekennzeichnet,**
**dass** die Bodenelement-Prüfeinrichtung (100) bzw. die Prüfvorrichtung (12) mit einer vorbestimmten konstanten oder variablen Geschwindigkeit gedreht wird, bis sie beispielsweise einen vorbestimmten Drehwinkel oder eine vorbestimmte Zeitspanne erreicht hat.

15. Verfahren nach Anspruch 13 oder 14,
**dadurch gekennzeichnet,**
**dass** als Prüfgröße beispielsweise der Drehwiderstand bestimmt wird und das als Bodenelement (32) ein Kunstrasenbodenelement (32, 88) oder ein Dämpfungsschichtbodenelement (76) eines Kunstrasens (88) verwendet wird, wobei das Kunstrasenbodenelement (32, 88) bzw. der Kunstrasen insbesondere ein Fußballkunstrasen ist.

## Claims

1. A floor element testing device (100) for testing a floor element (32), in particular an artificial turf floor element (32), wherein the floor element testing device (100) comprises:
- a testing apparatus (12, 38), which has a testing plate element (38), on the underside (40) of which is/are arranged one or more testing elements (16, 86),
- a fixing apparatus (46) for fixing the floor element testing device (100) in a predetermined position on the floor element (32), wherein the fixing apparatus (46) has a baseplate element (48), on the underside of which there is arranged a plurality of fixing elements (50),
- a drive motor device (34) for moving the testing apparatus (12, 38), and
- a measuring device (36) for determining at least one or more test variables,
**characterised in that**
the underside (40) of the testing plate element (38) is arranged flush with the underside of the baseplate element (48).

2. The testing device according to claim 1,
**characterised in that**
the measuring device (36), as test variable, determines a rotational resistance, an angle of rotation about which the floor element testing device (100) is rotated, a length by which the floor element testing device (100) is moved in the axial direction and/or a period of time within which the floor element testing device (100) is moved.

3. The floor element testing device according to claim 1 or 2,
**characterised in that** each testing element (42) is a nail element (86), a pin element, a needle element or a football stud element (36), wherein the testing element (42) is fastened non-exchangeably or exchangeably to the testing apparatus (12, 38).

4. The floor element testing device according to at least one of claims 1 to 3,
**characterised in that**
the fixing element (50) is a needle element (52) and the baseplate element (48) has an opening (54) in which the testing apparatus (12, 38) is arranged.

5. The floor element testing device according to any one of claims 1 to 4,
**characterised in that**
the testing apparatus (12, 38) by means of the drive motor device (34) is rotatable and/or displaceable in the axial direction with a predetermined speed or a predetermined speed profile, wherein the speed is constant or variable.

6. The floor element testing device according to at least one of claims 1 to 5,
**characterised in that**
the testing apparatus (12, 38) can be coupled to the measuring device (36) via a coupling device (44) and/or the drive device (34) can be coupled to the measuring device (36) via a coupling device (44) .

7. The floor element testing device according to at least one of claims 1 to 6,
**characterised in that**
the testing apparatus (12, 38) is mounted rotatably in a bearing housing (58), wherein the testing plate element (38) is optionally additionally connected to a measuring head device (56), and wherein the testing apparatus (12, 38) is fastened non-exchangeably or exchangeably to the floor element testing device (100).

8. The floor element testing device according to at least one of claims 1 to 7,
**characterised in that**
the floor element testing device (100) has a mounting device (64), wherein the mounting device (64) for example is connected to the drive motor device (34), and wherein the mounting device (64) for example has a wheel device (68) for moving or rolling the floor element testing device (100), and wherein the wheel device (68) or the mounting device (64) is provided for example with a handle device (70).

9. The floor element testing device according to claim 10,
**characterised in that**
the testing apparatus (12, 38) is movable along the mounting device (64) by means of the drive device (34) and/or is movable back and forth in the axial direction or is fixed in the axial direction.

10. The floor element testing device according to at least any one of claims 1 to 9,
**characterised in that**
the floor element testing device (100) has an evaluation device (72) or can be connected thereto in order to evaluate measurement results of the measuring device (36).

11. A testing apparatus for a floor element testing device according to any one of claims 1 to 10,
**characterised in that**
the testing apparatus (12, 38) has a testing plate element (38) with at least one or more testing elements (42, 16, 86) on the underside (40), wherein the testing plate element (38) is configured for example as an exchangeable disc, wherein the testing elements (42, 16, 86) are arranged at the same distance or at different distances from one another on the underside (40) of the testing plate element (38), and wherein each testing element (42) is a nail element (86), a football stud element (16), a pin element and/or a needle element.

12. The testing apparatus for a floor element testing device according to claim 11,
**characterised in that**
each testing element (42, 86) is arranged at a predetermined angle and/or in a predetermined orientation relative to the underside (40) of the testing plate element (38), wherein the angle lies in a range greater than 0° and less than 180°, and wherein the angle and/or the orientation of two or more testing elements (42, 86) are/is the same or different.

13. A method for testing a floor element using a floor element testing device according to any one of claims 1 to 12, wherein the method comprises the following steps:
- positioning the floor element testing device (100) at a predetermined position of the floor element (32) by means of a fixing apparatus (46) for fixing the floor element testing device (100) on the floor element (32), wherein the fixing apparatus (46) has a baseplate element (48), on the underside of which there is arranged a plurality of fixing elements (50),
- rotating the floor element testing device (100) or the testing apparatus (12, 38) by means of the drive motor device (34), and
- determining at least one or more test variables.

14. The method according to claim 13,
**characterised in that**
the floor element testing device (100) or the testing apparatus (12) is rotated with a predetermined constant or variable speed, for example until it has reached a predetermined angle of rotation or until a predetermined period of time has elapsed.

15. The method according to claim 13 or 14,
**characterised in that**
for example the rotational resistance is determined as test variable, and **in that** an artificial turf floor element (32, 88) or a damping layer floor element (76) of an artificial turf (88) is used as floor element (32), wherein the artificial turf floor element (32, 88) or the artificial turf is in particular an artificial turf for football.

## Revendications

1. Unité de test d'un élément au sol (100) destinée à la vérification d'un élément au sol (32), en particulier, d'un élément au sol en gazon artificiel (32), l'unité de test d'un élément au sol (100) présentant :
- un dispositif de test (12, 38) qui présente un élément de plaque de test (38) sur la face inférieure (40) duquel est disposé au moins un, ou sont disposés plusieurs, éléments de test (16, 86),
- un dispositif de fixation (46) pour la fixation de l'unité de test d'un élément au sol (100) dans une position prédéterminée sur l'élément au sol (32), où le dispositif de fixation (46) présente un élément de plaque de base (48) sur la face inférieure duquel sont disposés plusieurs éléments de fixation (50),
- une unité motorisée d'entraînement (34) pour le déplacement du dispositif de test (12, 38), et
- une unité de mesure (36) pour la détermination d'au moins une des grandeurs de test,
**caractérisée en ce que**
la face inférieure (40 de l'élément de plaque de test (38) opposée à la face inférieure de l'élément de plaque de base (48) est disposée jointive.

2. Unité de test selon la revendication 1,
**caractérisée en ce**
**que** l'unité de mesure (36) détermine, en tant que grandeur de mesure, une résistance à la rotation, un angle de rotation autour duquel l'unité de test d'un élément au sol (100) est mise en rotation, une longueur dont l'unité de test d'un élément au sol (100) est déplacée dans la direction axiale, et/ou un intervalle de temps pendant lequel l'unité de test d'un élément au sol (100) est déplacée.

3. Unité de test d'un élément au sol selon la revendication 1 ou 2,
**caractérisée en ce**
**que** l'élément de test (42) en question est un élément de clou (86), un élément de pointe, un élément d'aiguille ou un élément de crampon de football (36), où l'élément de test (42) est fixé sur le dispositif de test (12, 38) en n'étant pas échangeable ou en pouvant être échangé.

4. Unité de test d'un élément au sol selon au moins l'une des revendications 1 à 3,
**caractérisée en ce**
**que** l'élément de fixation (50) est un élément d'aiguille (52) et l'élément de plaque de base (48) présente un orifice (54) dans lequel le dispositif de test (12, 38) est disposé.

5. Unité de test d'un élément au sol selon au moins l'une des revendications 1 à 4,
**caractérisée en ce**
**que** le dispositif de test (12, 38) peut être mis en rotation au moyen de l'unité motorisée d'entraînement (34) avec une vitesse prédéterminée ou un profil de vitesse prédéterminé, et/ou peut être déplacé dans la direction axiale, la vitesse étant constante ou variable.

6. Unité de test d'un élément au sol selon au moins l'une des revendications 1 à 5,
**caractérisée en ce**
**que** le dispositif de test (12, 38) peut être accouplé avec l'unité de mesure (36) par le biais d'une unité de couplage (44), et/ou l'unité d'entraînement (34) peut être accouplée avec l'unité de mesure (36) par le biais d'une unité de couplage (44).

7. Unité de test d'un élément au sol selon au moins l'une des revendications 1 à 6,
**caractérisée en ce**
**que** le dispositif de test (12, 38) est logé en pouvant être mis en rotation dans un boîtier de positionnement (58), où l'élément de plaque de test (38) est relié en outre au choix avec une unité de tête de mesure (56) et où le dispositif de test (12, 38) est fixé sur l'unité de test d'un élément au sol (100) en n'étant pas échangeable ou en pouvant être échangé.

8. Unité de test d'un élément au sol selon au moins l'une des revendications 1 à 7,
**caractérisée en ce**
**que** l'unité de test d'un élément au sol (100) présente une unité de support (64), où l'unité de support (64) est reliée par exemple avec l'unité motorisée d'entraînement (34) et où l'unité support (64) présente, par exemple, un agencement de roue (68) pour le déplacement, respectivement, le roulage de l'unité de test d'un élément au sol (100), et où l'agencement de roue (68), ou l'unité de support (64), est muni(e), par exemple, d'une unité de préhension (70).

9. Unité de test d'un élément au sol selon la revendication 10,
**caractérisée en ce**
**que** le dispositif de test (12, 38) peut être déplacé le long de l'unité de support (64) au moyen de l'unité d'entraînement (34), et/ou dans la direction axiale vers l'avant et vers l'arrière à la main, ou est fixe dans la direction axiale.

10. Unité de test d'un élément au sol selon au moins l'une des revendications 1 à 9,
**caractérisée en ce**
**que** l'unité de test d'un élément au sol (100) présente une unité d'exploitation (72), ou peut être relié à celle-ci, pour l'exploitation des résultats de mesure de l'unité de mesure (36).

11. Dispositif de test pour une unité de test d'un élément au sol selon l'une des revendications 1 à 10,
**caractérisé en ce**
**que** le dispositif de test (12, 38) présente un élément de plaque de test (38) avec au moins un ou plusieurs éléments de test (42, 16, 86) sur la face inférieure (40), où l'élément de plaque de test (38) est conçu, par exemple, sous la forme d'un disque échangeable, où les éléments de test (42, 16, 86) sont disposés les uns par rapport aux autres à distance égale ou avec des distances variables sur la face inférieure (40) de l'élément de plaque de test (38), et où l'élément de test (42) en question est un élément de clou (86), un élément de crampon de football (16), un élément de pointe et/ou un élément d'aiguille.

12. Dispositif de test pour une unité de test d'un élément au sol selon la revendication 11,
**caractérisé en ce**
**que** l'élément de test (42, 86) en question est disposé dans un angle prédéterminé, et/ou dans une orientation prédéterminée, par rapport à la face inférieure (40) de l'élément de plaque de test (38), où l'angle se situe dans une plage supérieure à 0° et inférieure à 180° et où l'angle, et/ou l'orientation, de deux ou plusieurs éléments de test (42, 86) est égal(e) ou différent(e).

13. Procédé de vérification d'un élément au sol avec une unité de test d'un élément au sol selon l'une des revendications 1 à 12, où le procédé comprend les étapes :
- de positionnement de l'unité de test d'un élément au sol (100) sur une position prédéterminée de l'élément au sol (32) par un dispositif de fixation (46) pour la fixation de l'unité de test d'un élément au sol (100) sur l'élément au sol (32), où le dispositif de fixation (46) présente un élément de plaque de base (48), sur la face inférieure duquel sont disposés plusieurs éléments de fixation (50),
- de rotation de l'unité de test d'un élément au sol (100), respectivement, du dispositif de test (12, 38) au moyen de l'unité motorisée d'entraînement (34), et
- de détermination d'au moins une ou de plusieurs grandeurs de mesure.

14. Procédé selon la revendication 13,
**caractérisé en ce**
**que** l'unité de test d'un élément au sol (100), respectivement, le dispositif de test (12) est mis en rotation avec une vitesse prédéterminée constante ou variable jusqu'à ce qu'elle ait atteint, par exemple, un angle de rotation prédéterminé ou un intervalle de temps prédéterminé.

15. Procédé selon la revendication 13 ou 14,
**caractérisé en ce**
**qu'**en tant que grandeur de mesure, par exemple, on détermine la résistance à la rotation et qu'en tant qu'élément au sol (32), on emploie un élément au sol en gazon artificiel (32, 88), ou un élément au sol de couche d'amortissement (76) d'un gazon artificiel (88), où l'élément au sol en gazon artificiel (32, 88), respectivement, le gazon artificiel, est en particulier un gazon artificiel de football.
